# EUROPÄISCHE PATENTSCHRIFT

(11) **EP 3 867 505 B1**
(45) Veröffentlichungstag und Bekanntmachung des Hinweises auf die Patenterteilung: **29.05.2024**
(21) Anmeldenummer: 19762145.1
(22) Anmeldetag: 30.08.2019
(51) Int. Cl.: F02B 37/18, F01D 11/00, F16J 15/18, F16J 15/34, F01D 17/16, F02B 37/24, F02C 6/12, F02C 7/28

(54) **ABGASTURBINE EINES ABGASTURBOLADERS MIT EINER ABGEDICHTETEN WASTEGATE-VENTILEINRICHTUNG SOWIE ABGASTURBOLADER**
EXHAUST TURBINE OF A TURBOCHARGER WITH A SEALED WASTEGATE VALVE DEVICE AND TURBOCHARGER
TURBINE D'ÉCHAPPEMENT D'UN TURBOCOMPRESSEUR AVEC UNE VANNE DE DÉTOURNEMENT ÉTANCHÉIFIÉE ET TURBOCOMPRESSEUR

(30) Priorität: 15.10.2018 DE 102018217602
(43) Veröffentlichungstag der Anmeldung: 25.08.2021
(73) Patentinhaber: Vitesco Technologies GmbH, 93055 Regensburg (DE)
(72) Erfinder: LANGOHR, Marc, 81737 München (DE); MISJURIN, Viktor, 81737 München (DE)
(74) Vertreter: Vitesco Technologies
(86) Internationale Anmeldenummer: PCT/EP2019/073271
(87) Internationale Veröffentlichungsnummer: WO 2020/078608

(56) Entgegenhaltungen:
- DE-A1-102009 007 364
- DE-A1-102011 076 587
- DE-A1-102015 114 935
- DE-A1-102015 117 750
- DE-T5-112013 002 028
- DE-U1-202011 109 832
- US-A1- 2014 290 242

## Beschreibung

Die Erfindung betrifft eine Abgasturbine eines Abgasturboladers mit einer Wastegate-Ventileinrichtung, insbesondere eines Abgasturboladers für einen Verbrennungsmotor. Die Erfindung betrifft darüber hinaus einen Abgasturbolader mit einer vorgenannten Abgasturbine für einen Verbrennungsmotor.

Abgasturbolader werden vermehrt zur Leistungssteigerung bei Kraftfahrzeug-Verbrennungsmotoren eingesetzt. Dies geschieht immer häufiger mit dem Ziel, den Verbrennungsmotor bei gleicher oder gar gesteigerter Leistung in Baugröße und Gewicht zu reduzieren und gleichzeitig den Verbrauch und somit den CO₂-Ausstoß, im Hinblick auf immer strenger werdende gesetzliche Vorgaben diesbezüglich, zu verringern. Das Wirkprinzip besteht darin, die im Abgasstrom enthaltene Energie zu nutzen, um einen Druck in einem Ansaugtrakt des Verbrennungsmotors zu erhöhen und so eine bessere Befüllung eines Brennraumes des Verbrennungsmotors mit Luft-Sauerstoff zu bewirken. Somit kann mehr Treibstoff, wie Benzin oder Diesel, pro Verbrennungsvorgang umgesetzt werden, also die Leistung des Verbrennungsmotors erhöht werden.

Dazu weist der Abgasturbolader eine im Abgastrakt des Verbrennungsmotors angeordnete Abgasturbine, einen im Ansaugtrakt angeordneten Radialverdichter und ein dazwischen angeordnetes Läuferlager auf. Die Abgasturbine weist ein Turbinengehäuse und ein darin angeordnetes, durch den Abgasmassenstrom angetriebenes Turbinenlaufrad auf. Der Radialverdichter weist ein Verdichtergehäuse und ein darin angeordnetes, einen Ladedruck aufbauendes Verdichterlaufrad auf. Das Turbinenlaufrad und das Verdichterlaufrad sind auf den sich gegenüberliegenden Enden einer gemeinsamen Welle, der sogenannten Läuferwelle, drehfest angeordnet und bilden so den sogenannten Turboladerläufer. Die Läuferwelle erstreckt sich axial zwischen Turbinenlaufrad und Verdichterlaufrad durch das zwischen Abgasturbine und Radialverdichter angeordnete Läuferlagereinheit und ist in dieser, in Bezug auf die Läuferwellenachse, radial und axial drehgelagert. Gemäß diesem Aufbau treibt das vom Abgasmassenstrom angetriebene Turbinenlaufrad über die Läuferwelle das Verdichterlaufrad an, wodurch der Druck im Ansaugtrakt des Verbrennungsmotors, bezogen auf den Frischluftmassenstrom hinter dem Radialverdichter, erhöht und dadurch eine bessere Befüllung des Brennraumes eines jeweiligen Zylinders einer Brennkraftmaschine mit Luft-Sauerstoff bewirkt wird.

Im Betrieb wechselt der Verbrennungsmotor dynamisch seine Betriebszustände, was auch eine entsprechende dynamische Anpassung der Betriebszustände des Abgasturboladers erfordert. Dazu wird in Abgasturboladern die Drehzahl und Leistung der Abgasturbine häufig geregelt, indem ein im Turbinengehäuse angeordnetes Bypass-Ventil für den Abgasmassenstrom, ein sogenanntes Wastegate-Ventil geregelt geöffnet oder geschlossen wird, um bei Bedarf einen Teil des Abgases über einen Wastegatekanal an der Turbine vorbei zu leiten. Eine entsprechende Wastegate-Ventileinrichtung weist typischerweise einen mehrteiligen Aufbau auf, bestehend aus einer Ventilspindel, die drehbar um ihre Spindelachse im jeweiligen Turbinengehäuse gelagert ist und zur Betätigung des Wastegate-Ventils auf der Außenseite des Turbinengehäuses mit einem Stellaktuator in Wirkverbindung steht; einem im Innenraum des Turbinengehäuses an der Ventilspindel angeordneten Kurbelarm, und einer an dem Kurbelarm angeordneten Ventilklappe, die im geschlossenen Zustand des Wastegate-Ventils dichtend auf dem jeweiligen Ventilsitz aufliegt.

Dazu ist die Ventilspindel vom Innenraum des Turbinengehäuses durch dessen Gehäusewand nach außen geführt und in der Regel mittels einer in der Gehäusewand des Turbinengehäuses angeordneten Lagerbuchse, in der Gehäusewand des Turbinengehäuses um ihre Spindelachse drehbar gelagert.

Im Betrieb des Abgasturboladers sind insbesondere die Bauelemente der Abgasturbine, also auch das Turbinengehäuse und die Komponenten des Wastegate-Ventils, bedingt durch die vorherrschenden hohen Abgastemperaturen, hohen Temperaturen und großen Temperaturschwankungen ausgesetzt.

Da sich im Betrieb die Ventilspindel schneller aufheizt als die Lagerbuchse und es dadurch zum Klemmen der Spindel innerhalb der Lagerbuchse kommen kann, muss die Wärmeausdehnung der Ventilspindel über einen größeren Lagerbuchsen-Innendurchmesser im Vergleich zum Ventilspindeldurchmesser ausgeglichen werden. Über den so resultierenden Lagerspalt zwischen Lagerbuchse und Ventilspindel ist es möglich, dass ein Abgas-Leckagemassenstrom vom Innenraum des Turbinengehäuses nach außen in die Atmosphäre entweicht, der bei Abgasturboladern nach derzeitigem Stand der Technik bis zu 6 Liter pro Minute betragen kann. Strenger werdende gesetzliche Regelungen erfordern es jedoch diesen Abgas-Leckagemassenstrom auf ein Minimum zu beschränken bzw. vollständig zu verhindern.

Um dieser Problematik zu begegnen wurden bereits verschiedene Lösungsansätze im Stand der Technik aufgezeigt, die mehr oder weniger Erfolgversprechend scheinen.

So ist beispielsweise aus der DE 10 2009 030 520 A1 ist eine Regelklappenanordnung eines Abgasturboladers bekannt. Diese Regelklappenanordnung weist einen Klappenteller, eine mittels einer Buchse im Turbinengehäuse geführte Klappenwelle und eine Dichteinrichtung zur Abdichtung der Klappenwelle an zumindest einer Dichtstelle auf. Die Klappenwelle ist über einen äußeren Klappenhebel mit einer Regelstange eines Antriebs und über einen inneren Klappenhebel mit dem Klappenteller verbunden. Die Dichteinrichtung weist zumindest eine federnde Dichtlippe auf, die unter Vorspannung auf die Dichtstelle drückt.

Des Weiteren ist aus der DE 20 2011 109 832 U1 ein ähnlicher Lösungsansatz bekannt. Die dort offenbarte Wastegate-Anordnung weist eine in einer Buchse geführte Wastegatespindel auf, die mit einem Spindelstellelement verbunden ist. Im Übergangsbereich zwischen der Wastegatespindel und dem Spindelstellelement ist als Dichtung ein Blechring vorgesehen, der federnde Eigenschaften hat. Dieser Blechring ist tellerförmig ausgebildet und hat eine zentrale Öffnung, einen inneren Ringbereich und einen äußeren Ringbereich, wobei der innere Ringbereich mit dem äußeren Ringbereich durch einen mittleren Ringbereich verbunden ist. Der innere und der äußere Ringbereich sind eben gestaltet und liegen in zur Spiegelachse senkrechten, in axialer Richtung gegeneinander versetzten Ebenen, während der mittlere Ringbereich im Schnitt längs der Achse schräg zu den beiden anderen Ringbereichen verläuft.

Weitere Lösungsansätze, die sich mit der Lagerung und zum Teil auch mit der Abdichtung dieser Lagerung von Wastegatespindeln in Turboladergehäusen befassen sind aus den Dokumenten DE 10 2009 007364 A1, DE 11 2013 002028 T5, DE 10 2015 117750 A1, DE 10 2015 114935 A1 und US 2014 290242 A1 bekannt. Bei den offenbarten Lösungen, die sich mit der Abdichtung befassen, kommen zur Abdichtung zusätzliche Dichtelemente und/oder Federelemente zum Einsatz.

Die Nachteile der bekannten Lösungen liegen in einem erhöhten Teile- und Montageaufwand, da zur Abdichtung zusätzliche Bauteile vorgesehen sind, die mit hoher Präzision hergestellt, bereitgestellt und eingebaut werden müssen.

Eine Aufgabe, die der Erfindung zugrunde liegt, ist es somit, ein alternatives Konzept für ein Turbinengehäuse mit Wastegate-Ventileinrichtung, sowie einen Abgasturbolader anzugeben, bei denen der Abgas-Leckagemassenstrom effizient auf ein Minimum reduziert ist, wobei gleichzeitig die Teilezahl und der Montageaufwand gegenüber den aus dem Stand der Technik bekannten Lösungen reduziert ist, also die vorgenannten Nachteile bzw. Schwächen vermeidet und gleichzeitig einen besonders geräusch- und verschleißarmen Betrieb gewährleistet.

Erfindungsgemäß wird eine Abgasturbine eines Abgasturboladers mit einer Wastegate-Ventileinrichtung vorgeschlagen, die ein Turbinengehäuse mit einer Gehäusewand und einer die Gehäusewand durchdringenden Lagerbohrung aufweist, wobei eine Lagerbuchse in der Lagerbohrung des Turbinengehäuses gasdicht fixiert angeordnet ist. Weiterhin weist die Abgasturbine eine Wastegate-Ventileinrichtung mit einer Ventilspindel auf, wobei die Ventilspindel vom Innenraum des Turbinengehäuses in axialer Richtung in der Lagerbuchse durch die Lagerbohrung der Gehäusewand nach außen geführt und in der Lagerbuchse um ihre Spindelachse drehbar gelagert ist. Die Ventilspindel weist im Innenraum des Turbinengehäuses einen Ventilspindelabsatz und eine am Ende der Ventilspindel angeordnete Ventilklappe auf, die beispielsweise an einem Kurbelarm, angeordnet ist. Auf der Außenseite des Turbinengehäuses ist an der Ventilspindel ein Stellhebel mit einem Stellhebel-Anschlussflansch und ggf. weitere Verbindungselemente, zur Betätigung der Wastegate-Ventileinrichtung angeordnet. Die Erfindung ist dabei dadurch gekennzeichnet, dass die Lagerbuchse an ihren axialen Enden, auf der Außenseite des Turbinengehäuses mit dem Stellhebel-Anschlussflansch und im Innenraum des Turbinengehäuses mit dem Ventilspindelabsatz, jeweils mittels zumindest einem bezüglich der Spindelachse umlaufenden, sich axial erstreckenden Dicht-Steg und zumindest einer dazu komplementären Dicht-Nut, nach Art einer Labyrinth-Dichtung in axialer Richtung kämmend ineinandergreifen, zur gasdichten Trennung des Innenraums des Turbinengehäuses von der Umgebung.

Weiterhin wird ein Abgasturbolader für einen Verbrennungsmotor vorgeschlagen, der einen Radialverdichter, einer Läuferlagereinheit und eine Abgasturbine aufweist, wobei die Abgasturbine die Merkmale gemäß einer Ausführung der vorausgehend und nachfolgend beschriebenen erfindungsgemäßen Abgasturbine aufweist.

Die Vorteile der Erfindung sind darin zu sehen, dass eine effiziente Abdichtung der Ventilspindel, also eine gasdichte Trennung des Innenraums des Turbinengehäuses von der Umgebung, alleine durch die Anordnung und spezielle Gestaltung der Lagerbuchse in Verbindung mit der Ventilspindel und dem Stellhebel erzielt werden kann und weitere Bauteile zur Abdichtung nicht erforderlich sind. Die erhöhte Dichtwirkung beruht dabei auf der Verlängerung des Strömungsweges der Abgas-Leckage-Strömung durch den Lagerspalt zwischen Ventilspindel und Lagerbuchse, durch die nach Art einer Labyrinth-Dichtung in axialer Richtung kämmend ineinandergreifenden, hier sogenannten, Dicht-Nuten und Dicht-Stege zwischen Lagerbuchse, Ventilspindelabsatz und Stellhebel-Anschlussflansch. Dies erhöht den Strömungswiederstand und somit den Druckabfall im Leckage- bzw. Lagerspalt zwischen Ventilspindel, Lagerbuchse und Stellhebel-Anschlussflansch und somit die Dichtwirkung.

Weitere Ausführungsbeispiele der Erfindung sowie verschiedene Kombinationsmöglichkeiten von Merkmalen verschiedener Ausführungen gemäß den Unteransprüche werden im Folgenden anhand der Darstellungen in der Zeichnung näher erläutert.

Die Figuren zeigen:
- Figur 1: eine Ausführung eines erfindungsgemäßen Abgasturboladers mit aufgeschnittenem Turbinengehäuse, zur Sichtbarmachung der Wastegate-Ventileinrichtung;
- Figur 2: eine vergrößerte, vereinfachte Schnittansicht eines Ausschnittes des Turbinengehäuses einer Ausführung der Abgasturbine, im Bereich der Ventilspindel bzw. der Lagerbohrung;
- Figur 3: eine in ihre Einzelteile zerlegt dargestellte Wastegate-Ventileinrichtung einer Ausführung der erfindungsgemäßen Abgasturbine;
- Figur 4: einen vergrößerten Ausschnitt einer Lagerbuchse und einer darin angeordneten Ventilspindel einer Ausführung der Abgasturbine, zur Verdeutlichung des kämmenden Ineinandergreifens von Dicht-Steg und Dicht-Nut im Bereich des Ventilspindelabsatzes;
- Figur 5: eine weitere vergrößerte, Schnittansicht eines Ausschnittes der Lagerbuchse mit Ventilspindel und eines Stellhebel-Anschlussflansches einer weiteren Ausführung der Abgasturbine;

Funktions- und Benennungsgleiche Teile sind in den Figuren durchgehend mit denselben Bezugszeichen gekennzeichnet.

Die Merkmale und Merkmalskombinationen der nachfolgend in der Figurenbeschreibung genannten Ausführungen des erfindungsgemäßen Gegenstandes sind, soweit diese nicht alternativ anwendbar sind oder sich gar gegenseitig ausschließen, einzeln, zum Teil oder insgesamt, auch in gegenseitiger Kombination oder gegenseitiger Ergänzung, in Fortbildung des erfindungsgemäßen Gegenstands anzuwenden, ohne den Rahmen der Erfindung zu verlassen.

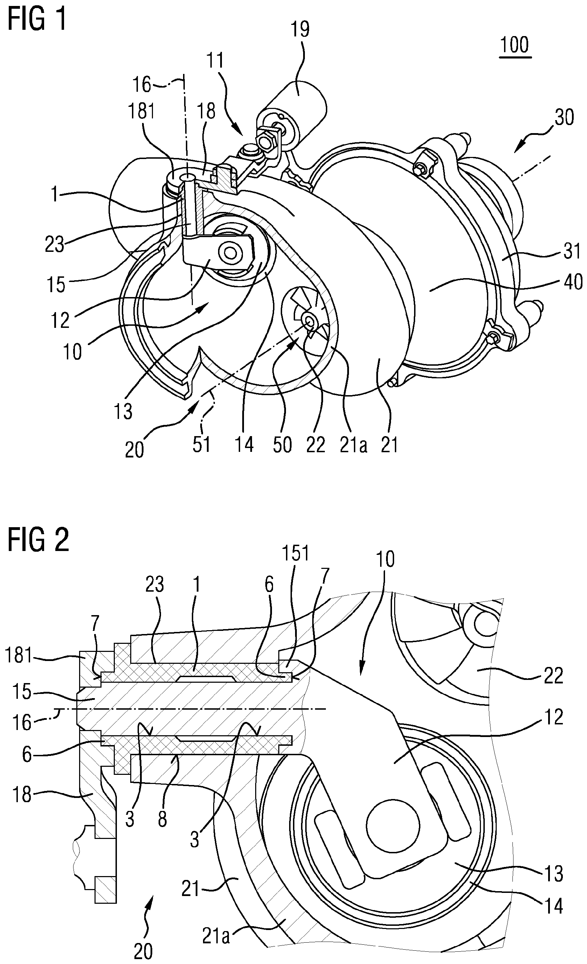

In Figur 1 ist ein Ausführungsbeispiel eines erfindungsgemäßen Abgasturboladers 100 mit einer erfindungsgemäßen Abgasturbine 20 mit aufgeschnittenem Turbinengehäuse 21 dargestellt. Die Schnittdarstellung erlaubt dabei einen Einblick in den Aufbau und die Lagerung der Wastegate-Ventileinrichtung 10 mit der Kurbelarm-Stelleinrichtung 11 und dem Stellaktuator 19. Wie bereits einleitend beschrieben weist der Abgasturbolader 100 eine Abgasturbine 20, einen Radialverdichter 30 und eine Läuferlagereinheit 40 auf. Die Abgasturbine 20 ist mit einer Wastegate-Ventileinrichtung 10 ausgestattet. In der Regel weist ein gebräuchlicher Abgasturbolader 100, wie in Figur 1 dargestellt, einen mehrteiligen Aufbau auf. Dabei sind ein im Abgastrakt des Verbrennungsmotors anordenbares Turbinengehäuse 21, ein im Ansaugtrakt des Verbrennungsmotors anordenbares Verdichtergehäuse 31 und zwischen Turbinengehäuse 21 und Verdichtergehäuse 31 eine Läuferlagereinheit 40 auf einer gemeinsamen Turboladerachse 51 nebeneinander angeordnet und montagetechnisch miteinander verbunden.

Der sogenannte Turboladerläufer 50 des Abgasturboladers 100 besteht aus dem Turbinenlaufrad 22, dem Verdichterlaufrad (in der Darstellung nicht erkennbar) sowie der Läuferwelle (in der Darstellung nicht erkennbar).

Das Turbinenlaufrad 22 und das Verdichterlaufrad sind auf den sich gegenüberliegenden Enden der gemeinsamen Läuferwelle angeordnet und mit diesen drehfest verbunden. Die Läuferwelle erstreckt sich in Richtung der Turboladerachse 51 axial durch die Läuferlagereinheit 40 und ist in dieser, mittels Radiallagern und einem Axiallager, axial und radial um seine Längsachse, die Läuferdrehachse, drehgelagert, wobei die Läuferdrehachse in der Turboladerachse 51 liegt, also mit dieser zusammenfällt. Der Turboladerläufer 50 rotiert im Betrieb um die Läuferdrehachse der Läuferwelle. Die Läuferdrehachse und gleichzeitig die Turboladerachse 51 sind durch die eingezeichnete Mittellinie dargestellt und kennzeichnen die Ausrichtung des Abgasturboladers 100.

Wie aus Figur 1 beispielhaft anhand des dargestellten aufgeschnittenen Turbinengehäuses 21 mit Wastegate-Ventileinrichtung 10 ersichtlich ist, weist die Wastegate-Ventileinrichtung 10 einen im Innenraum des Turbinengehäuses 21 angeordneten Kurbelarm 12 auf, an dem die tellerförmige Ventilklappe 13 angebracht ist. Die Ventilklappe 13 liegt im geschlossenen Zustand der Wastegate-Ventileinrichtung 10 dichtend auf dem Ventilsitz 14 auf und verschließt so den Wastegate-Kanal.

Die an den Kurbelarm 12 anschließende Ventilspindel 15 durchdringt die Gehäusewand 21a in der Lagerbohrung 23 und ist mittels der Lagerbuchse 1, die sowohl die Lagerfunktion als auch die Dichtfunktion in sich vereint, um ihre Spindelachse 16 drehbar gelagert.

Die bei dieser Ausführung eingesetzte Lagerbuchse 1 und der Stellhebel-Anschlussflansch 181 sowie der Ventilspindelabsatz 151 der Ventilspindel 15 weisen erfindungsgemäß, bezüglich der Spindelachse 16 umlaufende, sich axial erstreckende Dicht-Stege und dazu komplementäre Dicht-Nuten auf, die nach Art einer Labyrinth-Dichtung in axialer Richtung kämmend ineinandergreifen. Dies ist in Figur 1 aufgrund der Darstellungsgröße nur andeutungsweise erkennbar und wird anhand der vergrößerten Darstellung in Figur 2 hervorgehoben.

Außerhalb des Turbinengehäuses 21 ist ein Stellhebel 18 mit einem Stellhebel-Anschlussflansch 181 an der Ventilspindel 15 angebracht, an dem wiederum über weitere Übertragungselemente der Kurbelarm-Stelleinrichtung 11 ein Stell-Aktuator 19 (hier nur abgeschnitten dargestellt) angreift, wodurch also die Ventilspindel 15 auf der Außenseite des Turbinengehäuses 21 mit einem Stell-Aktuator 19 zur Betätigung der Wastegate-Ventileinrichtung 10 in Wirkverbindung steht.

Vorzugsweise ist dabei der Stell-Aktuator 19 als elektromechanischer Aktuator ausgebildet, der über ein größeres Kraftpotential verfügt als bisher übliche pneumatische Aktuatoren. Dies ist hilfreich, da durch die Dichtfunktion der Lagerbuchse 1, also durch die ineinandergreifenden und ggf. gleitend aufeinander laufenden Dicht-Stege und Dicht-Nuten, die erforderlichen Stellkräfte, insbesondere bei starkem Temperaturanstieg, über das bei herkömmlichen Lagerungen übliche Maß ansteigen können.

Es versteht sich, dass der erfindungsgemäße Abgasturbolader nicht auf das in Figur 1 gezeigte Ausführungsbeispiel beschränkt ist, sondern auch andere Ausführungsformen zum Beispiel mit verstellbaren Verdichter-Eintrittsöffnungen und/oder verstellbaren Verdichter-Diffusoren und/oder verstellbaren Turbinen-Austrittsöffnungen umfasst. Insbesondere liegen vor allem Ausführungen im Rahmen der Erfindung, bei denen die Lagerbuchse 1 sowohl auf ihrer gehäuseinneren Stirnseite als auch ihrer gehäuseäußeren Stirnseite, also auf ihren beiden Stirnseiten, mittels jeweils zumindest einem bezüglich der Spindelachse 16 umlaufenden, sich axial erstreckenden Dicht-Steg 6 und zumindest einer dazu komplementären Dicht-Nut 7, auf der jeweils gegenüberliegenden Seite, nach Art einer Labyrinth-Dichtung in axialer Richtung kämmend, mit dem Stellhebel-Anschlussflansch 181 und dem Ventilspindelabsatz 151 ineinandergreifen. Dabei können jeweils ein oder mehrere Dicht-Stege 6 auf der jeweiligen Stirnseite der Lagerbuchse 1 und dazu komplementäre Dicht-Nuten 7 auf der jeweils gegenüberliegenden Seite des Stellhebel-Anschlussflansches 181 bzw. des Ventilspindelabsatzes 151 ausgebildet sein. Auch eine Anordnung mehrerer sich abwechselnder Dicht-Stege 6 und Dicht-Nuten 7 auf der jeweiligen Stirnseite der Lagerbuchse 1 und eine dazu komplementär ausgebildete Anordnung von Dicht-Nuten 7 und Dicht-Stegen 6 auf der jeweils gegenüberliegenden Seite des Stellhebel-Anschlussflansches 181 sowie des Ventilspindelabsatzes 151 ist als im Rahmen der Erfindung liegend anzusehen.

In Figur 2 ist der Bereich des Turbinengehäuses 21, in dem die Wastegate-Ventileinrichtung 10 angeordnet ist, als Ausschnitt vergrößert und im Schnitt dargestellt. Deutlich erkennbar ist hier die Lagerbohrung 23 in der Gehäusewand 21a des Turbinengehäuses 21, mit der darin angeordneten Lagerbuchse 1 und der darin um ihre Spindelachse 16 drehgelagerten Ventilspindel 15. Im Hintergrund ist das Turbinenlaufrad 22 erkennbar.

An dem im Innenraum des Turbinengehäuses 21 angeordneten Ende der Ventilspindel 15 ist eine Ventilklappe 13 an einem Kurbelarm 12 angeordnet, die mit dem Ventilsitz 14 zusammenwirkt. Weiterhin weist die Ventilspindel 15 im Innenraum des Turbinengehäuses 21, hier unmittelbar am Ansatz der Kurbelarms 12 einen Ventilspindelabsatz 151, in Form eines radialen Überstands mit einem gegenüber der Ventilspindel 15 größeren Umfang oder Durchmesser auf, der zur Abdichtung des Lagerspaltes zwischen Ventilspindel 15 und Lagerbuchse 1 mit dem gegenüberliegenden stirnseitigen Ende der Lagerbuchse zusammenwirkt.

An dem in den Außenraum ragenden Ende der Ventilspindel 15 ist ein Stellhebel 18 mit einem Stellhebel-Anschlussflansch 181 drehfest befestigt. Über diesen Stellhebel 18 und ggf. weitere Verbindungselemente steht die Ventilspindel 15 auf der Außenseite des Turbinengehäuses 21 mit einem Stellaktuator (hier nicht dargestellt) zur Betätigung der Wastegate-Ventileinrichtung 10 in Wirkverbindung. Der Stellhebel-Anschlussflansch 181 wirkt zur Abdichtung des Lagerspaltes zwischen Ventilspindel 15 und Lagerbuchse 1 mit dem gegenüberliegenden stirnseitigen Ende der Lagerbuchse auf der Außenseite des Turbinengehäuses zusammen und ist mit der Ventilspindel zum Beispiel mittels einer Schweißverbindung 9. Dazu weist Die Ventilspindel 15 zum Beispiel an ihrem auf der Außenseite des Turbinengehäuses angeordneten Ende einen Zapfen auf der in einer Aufnahmebohrung im Stellhebel-Anschlussflansch 181 aufgenommen und mit dem Stellhebel 18 mittels der Schweißverbindung 9 fest verbunden ist.

Die Lagerbuchse 1 ist in der in der Gehäusewand 21a des Turbinengehäuses 21 vorgesehenen Lagerbohrung 23 aufgenommen. Zur Fixierung der Lagerbuchse 1 in der Lagerbohrung 23, kann vorzugsweise zwischen der Lagerbuchse 1 und der Lagerbohrung 23 ein gasdichter Presssitz 8 ausgebildet sein, so dass eine Leckage zwischen Lagerbuchse 1 und Gehäusewand 21a ausgeschlossen ist. Dies ermöglicht einen besonders einfachen Montagevorgang, ohne zusätzliche Einzelteile zur Befestigung der Lager-Dichtbuchse 1.

Die in Figur 2 gezeigte Ausführung der Abgasturbine 20 ist dadurch gekennzeichnet, dass die Lagerbuchse 1 an ihrem axialen Ende auf der Außenseite des Turbinengehäuses 21 mit dem Stellhebel-Anschlussflansch 181 und im Innenraum des Turbinengehäuses 21 mit dem Ventilspindelabsatz 151, jeweils mittels zumindest einem bezüglich der Spindelachse 16 umlaufenden, sich axial erstreckenden Dicht-Steg 6 und zumindest einer dazu komplementären Dicht-Nut 7, nach Art einer Labyrinth-Dichtung in axialer Richtung ineinander kämmt.

Bei dem gezeigten Beispiel ist jeweils ein Dicht-Steg 6 auf der jeweiligen Stirnseite der Dichtbuchse 1 angeordnet und eine jeweils dazu komplementär ausgebildete Dicht-Nut 7 ist auf der jeweils gegenüberliegenden Seite des Ventilspindelabsatzes 151 und des Stellhebel-Anschlussflansches 181 angeordnet, wobei die Dicht-Stege 6 und Dicht-Nuten 7 nach Art einer Labyrinth-Dichtung in axialer Richtung Ax der Spindelachse 16 ineinander kämmen.

Weiterhin ist die in Figur 2 dargestellte Ausführung der Abgasturbine 20 dadurch gekennzeichnet, dass zwischen der Lagerbuchse 1 und der Ventilspindel 15 der Wastegate-Ventileinrichtung 10, zumindest über einen oder mehrere Teilbereiche oder die vollständige axiale Erstreckung der Lagerbuchse 1 hinweg, ein Spindel-Gleitlager 3 ausgebildet ist. In dieser speziellen Darstellung sind zwei, jeweils von einem axialen Ende der Lagerbuchse 1 ausgehende Teilbereiche der der Lagerbuchse 1 als Spindel-Gleitlager 3 ausgebildet.

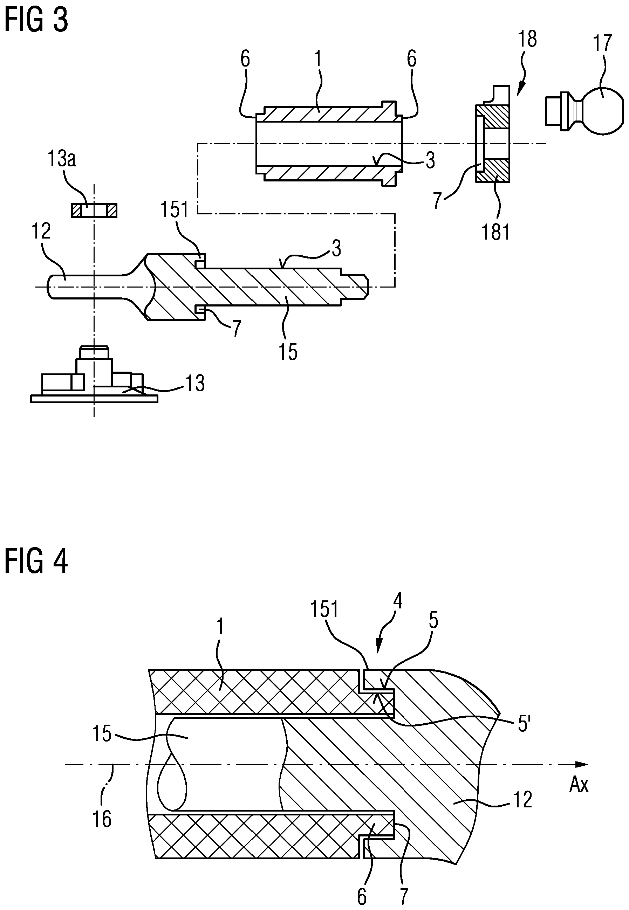

Figur 3 zeigt eine Wastegate-Ventileinrichtung 10 wie auch in Figur 2 beschrieben, jedoch ohne das Turbinengehäuse 21 und in demontierter Anordnung, so dass die Einzelteile separat voneinander erkennbar sind. Getrennt voneinander dargestellt sind die Lagerbuchse 1 mit jeweils einem Dicht-Steg 6 auf den Stirnseiten, eine Ventilspindel 15, mit einem Ventilspindelabsatz 151 und einer darin ausgebildeten Dicht-Nut 7, sowie einem Kurbelarm 12. Die Lagerbuchsen-Innenseite sowie die Mantelfläche des Schafts der Ventilspindel sind in diesem Beispiel über die vollständige axiale Erstreckung der Lagerbuchse 1 hinweg, als Spindel-Gleitlager 3 ausgebildet.

In der Figur 3 rechts von der Lagerbuchse 1 ist der Stellhebel 18 mit seinem Stellhebel-Anschlussflansch 181 dargestellt, wobei der Stellhebel-Anschlussflansch auf seiner der Lagerbuchse 1 zugewandten Seite eine Dicht-Nut 7 aufweist. Weiterhin ist dargestellt die Ventilklappe 13 und eine Haltescheibe 13a, die zur Befestigung der Ventilklappe 13 am Kurbelarm 12 dient sowie ein Kugelkopf 17, mittels dessen ein Aktuator mit dem Stellhebel 18 verbunden werden kann.

Figur 4 zeigt einen weiter vergrößerten Ausschnitt Ventilspindel 15 und Lagerbuchse 1 im Bereich des Ventilspindelabsatzes 151 in geschnittener Darstellung, zur Sichtbarmachung eines Details einer weiteren Ausführung einer erfindungsgemäßen Abgasturbine 20. Diese Ausführung der Abgasturbine 20 ist, wie die in Figur 2 gezeigte Ausführung, dadurch gekennzeichnet, dass die Lagerbuchse 1 an ihrem axialen Ende auf der Außenseite des Turbinengehäuses 21 mit dem Stellhebel-Anschlussflansch 181 und im Innenraum des Turbinengehäuses 21 mit dem Ventilspindelabsatz 151, jeweils mittels zumindest einem bezüglich der Spindelachse 16 umlaufenden, sich axial erstreckenden Dicht-Steg 6 und zumindest einer dazu komplementären Dicht-Nut 7, nach Art einer Labyrinth-Dichtung in axialer Richtung ineinander kämmt. Als ergänzendes Merkmal kommt hier jedoch dazu, dass die radial angeordneten, sich gegenüberliegenden Flächenanteile der Dicht-Stege 6 und der Dicht-Nuten 7, als Lagerflächen 5, 5' eines Radial-Gleitlagers 4 für die Ventilspindel 15 ausgebildet sind.

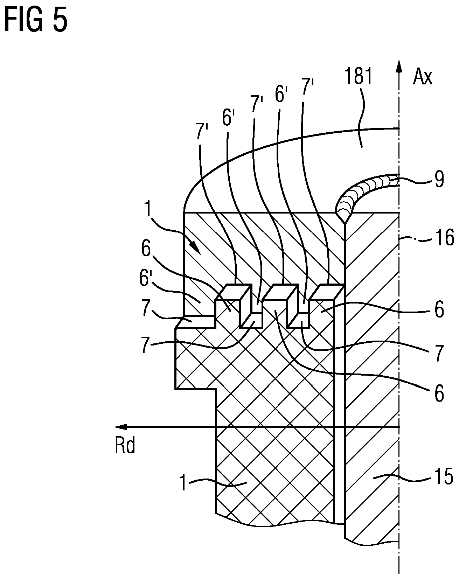

Schließlich ist in Figur 5 ein Detail zweier weiterer Ausführungen einer erfindungsgemäßen Abgasturbine 20 gezeigt. Dargestellt ist eine vergrößerte Schnittansicht eines Ausschnittes der Lagerbuchse 1 mit darin aufgenommener Ventilspindel 15 und eines, mittels Schweißverbindung 9 mit der Ventilspindel 15 verbundenen, Stellhebel-Anschlussflansches 181 der Abgasturbine 20. Dies Ausführung ist dadurch gekennzeichnet, dass an zumindest einer der Stirnflächen der Lagerbuchse 1 und an dem Stellhebel-Anschlussflansch 181 oder/und dem Ventilspindelabsatz 151, jeweils zumindest ein Dicht-Steg 6 und zumindest eine Dicht-Nut 7 nebeneinander ausgebildet sind, die wechselweise kämmend ineinandergreifen.

Eine weitere Ausgestaltung dieser Ausführung zeichnet sich darüberhinausgehend dadurch aus, dass an zumindest einer der Stirnflächen der Lagerbuchse 1 und an dem Stellhebel-Anschlussflansch 181 oder/und dem Ventilspindelabsatz 151, jeweils zumindest zwei Dicht-Stege 6 und zumindest zwei Dicht-Nuten 7 nebeneinander ausgebildet sind, die wechselweise kämmend ineinandergreifen.

Die in Figur 5 gezeigte Darstellung zeigt beispielhaft auf der Stirnseite der Lagerbuchse 1 drei bezüglich der Spindelachse 16 umlaufende, sich in axialer Richtung Ax der Spindelachse 16 erstreckende und in radialer Richtung Rd nebeneinander angeordnete Dicht-Stege 6 und alternierend dazu in radialer Richtung Rd angeordnete Dicht-Nuten 7. Dazu komplementär sind auf der, der Lagerbuchse 1 zugewandten, Seite des Stellhebel-Anschlussflansches 181 drei bezüglich der Spindelachse 16 umlaufende, sich in axialer Richtung Ax der Spindelachse 16 erstreckende, in radialer Richtung Rd nebeneinander angeordnete Dicht-Nuten 7` und alternierend dazu angeordnete Dicht-Stege 6' angeordnet. Die Dicht-Stege 6, 6 ` und die Dicht-Nuten 7, 7' greifen nach Art einer Labyrinth-Dichtung in axialer Richtung kämmend ineinander. Auf diese Weise umfasst die Darstellung die beiden vorgenannten Ausführungen. In vorteilhafter Weise wird so der Strömungsweg im Leckagespalt weiter verlängert, wodurch der Strömungswiederstand und somit die Dichtwirkung weiter gesteigert werden.

## Patentansprüche

1. Abgasturbine (20) eines Abgasturboladers (100) mit einer Wastegate-Ventileinrichtung (10), die aufweist:
- ein Turbinengehäuse (21) mit einer Gehäusewand (21a) und einer die Gehäusewand durchdringenden Lagerbohrung (23),
- eine Lagerbuchse, die in der Lagerbohrung (23) des Turbinengehäuses (21) gasdicht fixiert angeordnet ist,
- eine Wastegate-Ventileinrichtung (10) mit einer Ventilspindel (15),
wobei die Ventilspindel vom Innenraum des Turbinengehäuses (21) in einer axialen Richtung in der Lagerbuchse durch die Gehäusewand (21a) nach außen geführt und in der Lagerbuchse um ihre Spindelachse (16) drehbar gelagert ist,
- wobei die Ventilspindel (15) im Innenraum des Turbinengehäuses (21) einen Ventilspindelabsatz (151) und eine am Ende der Ventilspindel (15) angeordnete Ventilklappe (13) aufweist und
- wobei auf der Außenseite des Turbinengehäuses (21) ein Stellhebel (18) mit einem Stellhebel-Anschlussflansch (181), zur Betätigung der Wastegate-Ventileinrichtung (10), an der Ventilspindel (15) angeordnet ist,
**dadurch gekennzeichnet,**
**dass** die Lagerbuchse an ihren axialen Enden, auf der Außenseite des Turbinengehäuses (21) mit dem Stellhebel-Anschlussflansch (181) und im Innenraum des Turbinengehäuses (21) mit dem Ventilspindelabsatz (151), jeweils mittels zumindest einem bezüglich der Spindelachse (16) umlaufenden, sich axial erstreckenden Dicht-Steg (6) und zumindest einer dazu komplementären Dicht-Nut (7), nach Art einer Labyrinth-Dichtung in axialer Richtung kämmend ineinandergreifen, zur gasdichten Trennung des Innenraums des Turbinengehäuses (21) von der Umgebung.

2. Abgasturbine (20) nach Anspruch 1, **dadurch gekennzeichnet, dass** die radial angeordneten, sich gegenüberliegenden Flächenanteile der Dicht-Stege (6) und der Dicht-Nuten (7), als Lagerflächen (5, 5') eines Radial-Gleitlagers (4) für die Ventilspindel (15) ausgebildet sind.

3. Abgasturbine (20) nach einem der vorausgehenden Ansprüche, **dadurch gekennzeichnet, dass** der jeweilige Dicht-Steg (6) an der jeweiligen Stirnfläche der Lagerbuchse (1) ausgebildet ist und die jeweilige dazu komplementäre Dicht-Nut (7) an dem Stellhebel-Anschlussflansch (181) und dem Ventilspindelabsatz (151) ausgebildet ist.

4. Abgasturbine (20) nach einem der Ansprüche 1 bis 3, **dadurch gekennzeichnet, dass** an zumindest einer der Stirnflächen der Lagerbuchse (1) und an dem Stellhebel-Anschlussflansch (181) oder/und dem Ventilspindelabsatz (151), jeweils zumindest ein Dicht-Steg (6) und zumindest eine Dicht-Nut (7) nebeneinander ausgebildet sind, die wechselweise kämmend ineinandergreifen.

5. Abgasturbine (20) nach einem der Ansprüche 1 bis 3, **dadurch gekennzeichnet, dass** an zumindest einer der Stirnflächen der Lagerbuchse (1) und an dem Stellhebel-Anschlussflansch (181) oder/und dem Ventilspindelabsatz (151), jeweils zumindest zwei Dicht-Stege (6) und zumindest zwei Dicht-Nuten (7) nebeneinander ausgebildet sind, die wechselweise kämmend ineinandergreifen.

6. Abgasturbine (20) nach einem der vorausgehenden Ansprüche, **dadurch gekennzeichnet, dass** zur Fixierung der Lagerbuchse (1) in der Lagerbohrung (23) der Gehäusewand (21a) des Turbinengehäuses (21), zwischen der Lagerbuchse (1) und der Lagerbohrung (23) ein gasdichter Presssitz (8) ausgebildet ist.

7. Abgasturbine (20) nach einem der vorausgehenden Ansprüche, **dadurch gekennzeichnet, dass** zwischen der Lagerbuchse (1) und der Ventilspindel (15) der Wastegate-Ventileinrichtung (10), zumindest über einen oder mehrere Teilbereiche oder die vollständige axiale Erstreckung der Lagerbuchse (1) hinweg, ein Spindel-Gleitlager (3) ausgebildet ist.

8. Abgasturbolader (100) für einen Verbrennungsmotor mit einem Radialverdichter 30, einer Läuferlagereinheit (40) und einer Abgasturbine 20, wobei die Abgasturbine gemäß einem der vorausgehenden Ansprüche ausgebildet ist.

## Claims

1. Exhaust gas turbine (20) of an exhaust gas turbocharger (100) having a wastegate valve device (10), which has:
- a turbine housing (21) having a housing wall (21a) and a bearing bore (23) passing through the housing wall,
- a bearing bush, which is arranged in the bearing bore (23) of the turbine housing (21) in such a way as to be fixed in a gastight manner,
- a wastegate valve device (10) having a valve spindle (15),
wherein the valve spindle is passed outwards from the interior of the turbine housing (21) through the housing wall (21a) in an axial direction in the bearing bush and is mounted in the bearing bush so as to be rotatable about its spindle axis (16),
- wherein the valve spindle (15) has, in the interior of the turbine housing (21), a valve spindle shoulder (151) and a valve flap (13) arranged at the end of the valve spindle (15), and
- wherein an adjusting lever (18) having an adjusting lever connecting flange (181) is arranged on the valve spindle (15) on the outside of the turbine housing (21) in order to actuate the wastegate valve device (10),
**characterized**
**in that** the bearing bush intermeshes in the axial direction in the manner of a labyrinth seal at its axial ends with the adjusting lever connecting flange (181) on the outside of the turbine housing (21) and with the valve spindle shoulder (151) in the interior of the turbine housing (21), in each case by means of at least one axially extending sealing web (6) and at least one sealing groove (7), complementary thereto, which are circumferential with respect to the spindle axis (16), for gastight separation of the interior of the turbine housing (21) from the environment.

2. Exhaust gas turbine (20) according to Claim 1, **characterized in that** the radially arranged, mutually opposite surface portions of the sealing webs (6) and of the sealing grooves (7) are designed as bearing surfaces (5, 5') of a radial sliding bearing (4) for the valve spindle (15).

3. Exhaust gas turbine (20) according to either of the preceding claims, **characterized in that** the respective sealing web (6) is formed on the respective end face of the bearing bush (1), and the respective sealing groove (7), complementary thereto, is formed on the adjusting lever connecting flange (181) and the valve spindle shoulder (151).

4. Exhaust gas turbine (20) according to any one of Claims 1 to 3, **characterized in that** in each case at least one sealing web (6) and at least one sealing groove (7), which intermesh alternately, are formed adjacent to one another on at least one of the end faces of the bearing bush (1) and on the adjusting lever connecting flange (181) and/or the valve spindle shoulder (151).

5. Exhaust gas turbine (20) according to any one of Claims 1 to 3, **characterized in that** in each case at least two sealing webs (6) and at least two sealing grooves (7), which intermesh alternately, are formed adjacent to one another on at least one of the end faces of the bearing bush (1) and on the adjusting lever connecting flange (181) and/or the valve spindle shoulder (151) .

6. Exhaust gas turbine (20) according to any one of the preceding claims, **characterized in that** a gastight press fit (8) is formed between the bearing bush (1) and the bearing bore (23) in order to fix the bearing bush (1) in the bearing bore (23) of the housing wall (21a) of the turbine housing (21).

7. Exhaust gas turbine (20) according to any one of the preceding claims, **characterized in that** a spindle sliding bearing (3) is formed between the bearing bush (1) and the valve spindle (15) of the wastegate valve device (10), at least over one or more partial regions or the full axial extent of the bearing bush (1).

8. Exhaust gas turbocharger (100) for an internal combustion engine having a radial compressor (30), a rotor bearing unit (40) and an exhaust gas turbine (20), wherein the exhaust gas turbine is designed according to any one of the preceding claims.

## Revendications

1. Turbine à gaz d'échappement (20) d'un turbocompresseur à gaz d'échappement (100) avec un dispositif de soupape wastegate (10), qui présente :
- un carter de turbine (21) avec une paroi de carter (21a) et un alésage de palier (23) traversant la paroi de carter,
- un coussinet qui est agencé de manière fixe étanche aux gaz dans l'alésage de palier (23) du carter de turbine (21),
- un dispositif de soupape wastegate (10) avec une broche de soupape (15),
la broche de soupape étant guidée vers l'extérieur depuis l'espace intérieur du carter de turbine (21) dans une direction axiale dans le coussinet à travers la paroi de carter (21a) et étant montée dans le coussinet de manière rotative autour de son axe de broche (16),
- la broche de soupape (15) présentant dans l'espace intérieur du carter de turbine (21) un épaulement de broche de soupape (151) et un clapet de soupape (13) agencé à l'extrémité de la broche de soupape (15) et
- un levier de réglage (18) avec une bride de raccordement de levier de réglage (181) pour l'actionnement du dispositif de soupape wastegate (10) étant agencé sur la broche de soupape (15) sur le côté extérieur du carter de turbine (21),
**caractérisé en ce que**
le coussinet s'engrène à ses extrémités axiales, sur le côté extérieur du carter de turbine (21) avec la bride de raccordement de levier de réglage (181) et dans l'espace intérieur du carter de turbine (21) avec l'épaulement de broche de soupape (151), respectivement au moyen d'au moins une nervure d'étanchéité (6) s'étendant axialement, périphérique par rapport à l'axe de broche (16), et d'au moins une rainure d'étanchéité (7) complémentaire à celle-ci, à la manière d'un joint à labyrinthe en direction axiale, pour séparer de manière étanche aux gaz l'espace intérieur du carter de turbine (21) de l'environnement.

2. Turbine à gaz d'échappement (20) selon la revendication 1, **caractérisée en ce que** les parties de surface des nervures d'étanchéité (6) et des rainures d'étanchéité (7), agencées radialement, se faisant face, sont réalisées sous forme de surfaces de palier (5, 5') d'un palier lisse radial (4) pour la broche de soupape (15) .

3. Turbine à gaz d'échappement (20) selon l'une quelconque des revendications précédentes, **caractérisée en ce que** la nervure d'étanchéité respective (6) est réalisée sur la surface frontale respective du coussinet (1) et la rainure d'étanchéité respective complémentaire (7) est formée sur la bride de raccordement de levier de réglage (181) et sur l'épaulement de broche de soupape (151) .

4. Turbine à gaz d'échappement (20) selon l'une quelconque des revendications 1 à 3, **caractérisée en ce que** sur au moins l'une des surfaces frontales du coussinet (1) et sur la bride de raccordement de levier de réglage (181) et/ou sur l'épaulement de broche de soupape (151) sont réalisées respectivement côte à côte au moins une nervure d'étanchéité (6) et au moins une rainure d'étanchéité (7), qui s'engrènent alternativement.

5. Turbine à gaz d'échappement (20) selon l'une quelconque des revendications 1 à 3, **caractérisée en ce que** sur au moins l'une des surfaces frontales du coussinet (1) et sur la bride de raccordement de levier de réglage (181) et/ou sur l'épaulement de broche de soupape (151) sont réalisées respectivement côte à côte au moins deux nervures d'étanchéité (6) et au moins deux rainures d'étanchéité (7), qui s'engrènent alternativement.

6. Turbine à gaz d'échappement (20) selon l'une quelconque des revendications précédentes, **caractérisée en ce que**, pour fixer le coussinet (1) dans l'alésage de palier (23) de la paroi de carter (21a) du carter de turbine (21), un ajustement serré (8) étanche aux gaz est réalisé entre le coussinet (1) et l'alésage de palier (23) .

7. Turbine à gaz d'échappement (20) selon l'une quelconque des revendications précédentes, **caractérisée en ce qu'**un palier lisse de broche (3) est réalisé entre le coussinet (1) et la broche de soupape (15) du dispositif de soupape wastegate (10), au moins sur une ou plusieurs zones partielles ou sur l'extension axiale complète du coussinet (1).

8. Turbocompresseur à gaz d'échappement (100) pour un moteur à combustion interne avec un compresseur radial (30), une unité de palier de rotor (40) et une turbine à gaz d'échappement (20), la turbine à gaz d'échappement étant réalisée selon l'une quelconque des revendications précédentes.
